# EUROPÄISCHE PATENTSCHRIFT

(11) **EP 2 761 344 B1**
(45) Veröffentlichungstag und Bekanntmachung des Hinweises auf die Patenterteilung: **07.11.2018**
(21) Anmeldenummer: 12781031.5
(22) Anmeldetag: 27.09.2012
(51) Int. Cl.: G02B 6/14, H01S 3/067, G02B 6/02, G02B 6/036

(54) **MODENFILTER MIT BRECHZAHLMODIFIKATION**
MODE FILTER WITH REFRACTIVE INDEX MODIFICATION
FILTRE DE MODE AVEC MODIFICATION DE L'INDICE DE RÉFRACTION

(30) Priorität: 30.09.2011 DE 102011114586
(43) Veröffentlichungstag der Anmeldung: 06.08.2014
(73) Patentinhaber: Fraunhofer Gesellschaft zur Förderung der angewandten Forschung e.V., 80686 München (DE); Friedrich-Schiller-Universität Jena, 07743 Jena (DE)
(72) Erfinder: VOIGTLÄNDER, Christian, 07745 Jena (DE); THOMAS, Jens, Ulrich, 55128 Mainz (DE); WILLIAMS, Robert, Berowra New South Wales 2081 (AU); NOLTE, Stefan, 07751 Jena (DE); TÜNNERMANN, Andreas, 99425 Weimar (DE)
(74) Vertreter: Isfort, Olaf
(86) Internationale Anmeldenummer: PCT/EP2012/004060
(87) Internationale Veröffentlichungsnummer: WO 2013/045097

(56) Entgegenhaltungen:
- EP-A2- 0 736 784
- US-A- 4 049 413
- US-A- 6 130 974
- US-B1- 7 412 118
- S.-H. CHEN AND T.-J. CHEN: "OBSERVATION OF MODE SELECTION IN A RADIALLY ANISOTROPIC CYLINDRICAL WAVEGUIDE WITH LIQUID-CRYSTAL CLADDING", APPLIED PHYSICS LETTERS, AIP, AMERICAN INSTITUTE OF PHYSICS, MELVILLE, NY, US, Bd. 64, Nr. 15, 11. April 1994 (1994-04-11), Seiten 1893-1895, XP000440938, ISSN: 0003-6951, DOI: 10.1063/1.111760

## Beschreibung

Die Erfindung betrifft einen Modenfilter zur Reduzierung von Moden höherer Ordnung, mit einer optischen Faser, welche einen Kern und einen diesen umgebenden Mantel aufweist, wobei Mantel und Kern voneinander abweichende Brechzahlen haben. Ebenso betrifft die Erfindung einen Faserlaser, insbesondere einen multi-mode High-Power-Faserlaser, welcher einen Modenfilter gemäß der Erfindung verwendet, um Moden höherer Ordnung zu unterdrücken.

Die Nachfrage nach Modenfiltern zur Reduzierung von Moden höherer Ordnung ist gleichzeitig mit dem verstärkten Interesse an Faserlasern enorm gewachsen. Ein Grund dafür liegt in der Unempfindlichkeit der Faserlaser gegenüber äußeren Einflüssen. Dadurch, dass auch gleichzeitig die Resonatorspiegel durch in den Faserkern eingeschriebene Faser-Bragg-Gitter umgesetzt werden, ergibt sich eine vollständig faserintegrierte Herstellung der Faserlaser. Der relativ kleine Querschnitt des aktiven Mediums innerhalb des Faserkerns gewährleistet einen sehr guten Wärmetransport nach außen. Somit ist es möglich - ohne Verschlechterung der thermischen Eigenschaften - durch Verlängern der Faser die Laserverstärkung zu erhöhen und somit sehr hohe Ausgangsleistungen zu erreichen. Der kleine Querschnitt des Faserkerns wirkt sich jedoch bei sehr hohen Leistungen nachteilig auf die Performance des Lasers aus. Die örtliche Beschränkung des geführten Lichts führt zu sehr hohen Intensitäten im Faserkern, wodurch das Entstehen von parasitären nichtlinearen Effekten (Ramanstreuung, Brillouinstreuung und Selbstphasenmodulation) provoziert wird. Dies wird zusätzlich noch durch eine lange Interaktionslänge des Laserlichtes mit dem Faserkern verstärkt.

Dieser Nachteil wird bisher im Stand der Technik durch den Einsatz von Large-Mode-Area (LMA)-Fasern reduziert. LMA-Fasern besitzen einen deutlich größeren Kerndurchmesser als herkömmliche Single-Mode-Fasern. Dies wird durch einen sehr kleinen Brechzahlunterschied zwischen Fasermantel und Kern erreicht. Jedoch sind die heute üblicherweise verwendeten LMA-Fasern nicht strikt single-modig, wodurch auch Moden höherer Ordnung innerhalb der Faser geführt werden. Somit kann es zur Modeninterferenz und zu Verstärkungskonflikten der einzelnen Moden kommen. Zusätzlich verschlechtern die höheren Moden das Abstrahlverhalten des Lasers. Diese Nachteile verstärken sich mit größer werdendem Kerndurchmesser, da dort die Multimodigkeit erhöht wird.

Daher existieren im Stand der Technik weitere Lösungsansätze, um den großen Kern von Multi-Mode-Fasern in Faserlasern nutzen zu können. Diese basieren im Wesentlichen darauf, die Grundmode selektiv anzuregen. Dies kann beispielsweise durch die Kombination einer Single-Mode-Faser mit kleinem Kerndurchmesser und einer in Strahlrichtung dahinter angeordneten Multi-Mode-Faser mit großem Kerndurchmesser erreicht werden. Dabei wird die aktive Multi-Mode-Faser als Verstärker genutzt. Problematisch ist dabei jedoch, dass die Moden durch Störungen ineinander überkoppeln können. Weiterhin führt eine stärkere aktive Dotierung des Zentrums des Kerns der Multi-Mode-Faser dazu, dass die Grundmode mehr verstärkt wird als die Moden höherer Ordnung.

Alternativ dazu existieren weitere Lösungen, die eine Modenfilterung mittels einer modifizierten Fabry-Perot-Kavität aus zwei Faser-Bragg-Gittern erreichen. Dabei überlagern sich die spektralen Eigenschaften der Faser-Bragg-Gitter mit der Kavität. Es entsteht ein Reflektionsspektrum, bei dem sich innerhalb der Reflektionspeaks der Faser-Bragg-Gitter ein Transmissionsminimum aufgrund der Eigenschaften der Kavität befindet. Durch eine zusätzliche zwischen den Faser-Bragg-Gittern in den Faserkern eingebrachte Brechzahländerung, die sich entlang der Faserachse erstreckt, wird die optische Weglänge der Moden verändert. Wird die optische Weglänge für die verschiedenen Moden der Faser unterschiedlich stark verändert, verschiebt sich die Wellenlänge der Fabry-Perot-Kavität der Moden unterschiedlich stark. Es kann dadurch eine Modenselektion erreicht werden. Weitere Lösungen sind im Stand der Technik US 4 049 413 A, US 6 130 974 A, und US 7 412 118 B1 offenbart.

Die Erfindung strebt nun entgegen dem Stand der Technik einen alternativen Modenfilter an, bei welchem der Herstellungsaufwand minimiert ist und zusätzliche Filterkomponenten wie Faser-Bragg-Gitter nicht mehr erforderlich sind.

Diese Aufgabe wurde durch einen Modenfilter gemäß Anspruch 1 gelöst.

Durch diese Ausgestaltung werden die Führungseigenschaften der Faser in einem bestimmten Bereich nachträglich verändert, so dass die Moden höherer Ordnung einen größeren Führungsverlust als in den übrigen Bereichen der Faser erfahren. Der oder die Brechzahlmodifikationsbereiche befinden sich dabei entlang der äußeren Begrenzung des Faserkerns am Übergang zum Mantel. Durch die erfindungsgemäße Lösung ist es nicht mehr notwendig, unterschiedliche Fasern zusammen zu fügen (Splicen), was einerseits zu erhöhter Absorption an den Übergangsstellen führt und andererseits sehr justageaufwendig ist. Weiterhin ist es entgegen dem Stand der Technik nicht notwendig, zwei aufeinander abgestimmte Faser-Bragg-Gitter in Form einer kurzen Kavität in der Faser zu erzeugen. Der neue Ansatz ist auch ohne Faser-Bragg-Gitter anwendbar.

Die Erfindung sieht vor, dass die Länge des Brechzahlmodifikationsbereiches in axialer Richtung der Faser begrenzt ist. Vorteilhaft entspricht die Länge der einfachen bis vielfachen (z.B. bis zu zehnfachen) Größe des Kerndurchmessers. Diese Länge ist ausreichend, um den Modenfelddurchmesser der Moden höherer Ordnung zu erhöhen. Sobald die Moden dann das Ende des Brechzahlmodifikationsbereiches erreichen, entstehen Verluste an dem kleiner werdenden Führungsquerschnitt, wodurch die Moden höherer Ordnung, welche im Gegensatz zur Grundmode nicht hauptsächlich im Kernzentrum propagieren, Verluste beim Zurückkoppeln in den Faserkern erleiden.

Es empfiehlt sich, dass der Brechzahlmodifikationsbereich eine Brechzahl größer als die des Mantels aufweist. Insbesondere empfiehlt es sich, dass der Brechzahlmodifikationsbereich eine Brechzahl gleich der des Kerns aufweist. Wird die Brechzahl um den Faserkern in einem in axialer Richtung der Faser begrenzten Bereich auf das Niveau des Kerns angehoben, so sehen die im Kern propagierenden Moden in diesem Brechzahlmodifikationsbereich einen größeren effektiven Kern. Der Modenfelddurchmesser vergrößert sich wie zuvor beschrieben, bis die Moden das Ende des Brechzahlhubes (d. h. des Brechzahlmodifikationsbereiches) erreichen und dadurch selektiv Verluste erleiden. Dieser Effekt kann in einer aktiven Laserfaser genutzt werden, um die Verluste der Moden höherer Ordnung zu steigern und somit den Laser zur Single-Mode-Emission zu zwingen.

Eine Ausführungsvariante die nicht gemäß Erfindung ist sieht vor, dass der Brechzahlmodifikationsbereich zylinderförmig um den Kern angeordnet ist. Dadurch ergibt sich ein gleichmäßiger Verlust der Moden höherer Ordnung über den Faserumfang.

Bei erfindungsgemäßem Modenfilter sind zwei zueinander parallele Brechzahlmodifikationsbereich so ausgebildet, dass sie den Kern auf gegenüberliegenden Seiten tangential berühren. Hierdurch lässt sich zusätzlich eine polarisationsabhängige Selektion der in der Faser geführten Moden erreichen. Dies bietet sich insbesondere dort an, wo Laserlicht mit linear polarisierter Ausgangsstrahlung gewünscht ist. Neben dieser Form des Brechzahlmodifikationsbereiches sind ebenfalls andere Formen, die aber nicht gemäß Erfindung sind, denkbar, insbesondere solche, die sich auch für polarisationsselektive Fasern eignen, beispielsweise sternförmige, quadratische oder andere Querschnittsformen.

Es kann weiterhin vorgesehen sein, dass die Faser in axialer Richtung mehrere Brechzahlmodifikationsbereiche aufweist. Dadurch lässt sich die Filterung in mehreren hinter einander liegenden Stufen durchführen, wodurch die Qualität der Filterung zusätzlich erhöht werden kann. Ebenso wäre es möglich, die in axialer Richtung der Faser hintereinander liegenden Brechzahlmodifikationsbereiche so aufeinander abzustimmen, dass der Brechzahlhub von Modifikationsbereich zu Modifikationsbereich ansteigt, oder die Länge oder der Durchmesser des Modifikationsbereiches. Ebenso können sich auch zylinderförmig ausgebildete und polarisationsselektive Bereich abwechseln.

Weiterhin ist es auch möglich, dass der Kern zusätzlich ein oder mehrere Faser-Bragg-Gitter aufweist. Faser-Bragg-Gitter weisen eine in den Kern eingebrachte in axialer Richtung der Faser periodische Brechzahlmodulation auf. Da die einzelnen Moden in einer multi-modigen Faser unterschiedliche effektive Brechzahlen besitzen, treten im Reflektionsspektrum gemäß der Bragg-Bedingung mehrere Reflektionen bei unterschiedlichen Wellenlängen auf. Wird das Faser-Bragg-Gitter mit dem zuvor beschriebenen Modenfilter kombiniert, so wird die Reflektivität der höheren Moden reduziert, was in einem Laser zu einer bevorzugten Verstärkung der Grundmode führt. Somit wird durch die Kombination von Modenfilter und Faser-Bragg-Gitter neben dem single-modigen Verhalten auch eine Wellenlängenstabilisierung erreicht. Insgesamt nimmt die Unempfindlichkeit des Faserlasers gegenüber Umgebungseinflüssen zu.

Schließlich kann es vorgesehen sein, dass die Faser eine Large-Mode-Area (LMA) -Faser ist. Der erfindungsgemäße Ansatz ist daher auch für genau die Fasern geeignet, welche im Allgemeinen für den Aufbau von single-modigen High-Power-Faserlasern verwendet werden. Da LMA-Fasern leicht multi-modig sind, eignet sich der dargestellte Modenfilter ganz besonders auch für diese.

Weitere Vorteile und Merkmale der vorliegenden Erfindung werden im Folgenden anhand der in den beiliegenden Figuren gezeigten Ausführungsbeispiele für die erfindungsgemäße Vorrichtung näher erläutert. Dabei zeigen
- Figur 1a, b:: eine Faser gemäß einem Vergleichsbeispiel mit zylinderförmigem Brechzahlmodifikationsbereich im Querschnitt (a) und im Längsschnitt (b),
- Figur 2 a, b:: eine Faser mit zwei zueinander parallelen Brechzahlmodifikationsbereichen im Querschnitt (a) und im Längsschnitt (b),
- Figur 3:: Kombination einer Faser mit Brechzahlmodifikationsbereich und Faser-Bragg-Gitter.
- Figur 4 a, b:: zwei Reflexionsspektren einer 2-modigen Faser mit Faser-Bragg-Gitter, a) ohne zusätzliche Brechzahlmodifikation, b) mit zusätzlicher Brechzahlmodifikation.

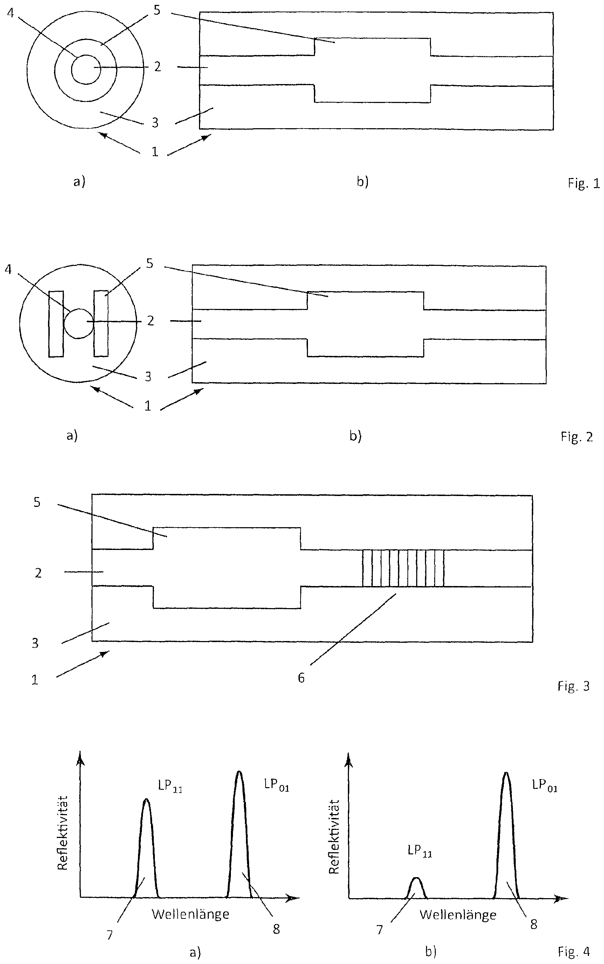

Die Figuren 1 a) und b) des Vergleichsbeispiels zeigen eine Faser 1 mit einem Kern 2 und einem Mantel 3. Zwischen Kern 2 und Mantel 3 befindet sich ein Übergangsbereich 4. Im Bereich des Übergangsbereiches 4 ist an die radial nach außen weisende Begrenzung des Kerns 2 ein Brechzahlmodifikationsbereich 5 angeordnet, welcher sich im Längsschnitt der Faser betrachtet über die Begrenzung des Kerns 2 radial nach außen erstreckt.

Die Figuren 2 a) und b) zeigen ebenfalls eine Faser 1 mit einem Kern 2 und einem Mantel 3. An der radial nach außen weisenden Begrenzung des Kerns 2 sind erfindungsgemäß zwei Brechzahlmodifikationsbereiche 5 angeordnet, welche zueinander parallel verlaufen und den Kern 2 auf gegenüberliegenden Seiten tangential berühren.

Die Figur 3 zeigt eine Faser mit einem Brechzahlmodifikationsbereich 5 und einem Faser-Bragg-Gitter 6. Alternativ kann die Brechzahlmodifikation 5 auch mit dem Faser-Bragg-Gitter 6 kombiniert werden.

Die Figuren 4 a) und b) zeigen Reflexionsspektren einer 2-modigen Faser mit Faser-Bragg-Gitter innerhalb des Kerns 2. Figur 4 a) stellt dabei das Reflektivitätsspektrum der Faser 1 ohne zusätzlichen Brechzahlmodifikationsbereich 5 dar, während Figur 4 b) das Reflektivitätsspektrum der Faser 1 mit zusätzlichem Brechzahlmodifikationsbereich 5 angibt. Dort sind jeweils die Reflektivitäten zweier Moden 7, 8 gezeigt, wobei die eine Mode die LP11-Mode 7 und die andere Mode die LP01-Mode 8 ist.

Gemäß der Faseranordnung in Figur 1 wird im Folgenden anhand einer 2-modigen-Faser 1 erläutert, in welcher zwei Moden 7, 8 ausbreitungsfähig sind, nämlich beispielsweise die LP11-Mode 7 und die LP01-Mode 8. Die beiden Moden propagieren innerhalb des Kerns 2 und des Mantels 3 der Faser, wobei die Mode LP01 8 sich als Grundmode hauptsächlich im Zentrum des Kerns 2 ausbreitet. Die LP11-Mode 7 ist eine Mode höherer Ordnung. Sie propagiert im Vergleich zur Grundmode 8 mehr in der Nähe des Übergangsbereiches 4 von Kern 2 und Mantel 3. Der Modenfilter verfügt nun gemäß Figur 1 über einen zylinderförmig um den Kern 2 angeordneten Brechzahlmodifikationsbereich 5. Dieser Brechzahlmodifikationsbereich 5 weist die gleiche Brechzahl auf wie der Kern 2. Dadurch stellt dieser Brechzahlmodifikationsbereich 5 eine lokale Durchmessererweiterung des Kerns 2 dar, welche eine endliche Länge in axialer Richtung der Faser 1 aufweist. Durch diesen radial über die Begrenzung des Kerns 2 hinausragenden Brechzahlmodifikationsbereich 5 wird die Brechzahl dort auf das Niveau des Kerns 2 angehoben, wodurch die im Kern 2 propagierenden Moden 7, 8 in diesem Bereich 5 einen größeren effektiven Kern 2 sehen. Der Modenfelddurchmesser vergrößert sich, bis die Moden 7, 8 das Ende des endlichen Brechzahlmodifikationsbereiches 5 erreichen. Da die Grundmode 8 im Zentrum des Kerns 2 die höchste Intensität besitzt, erfährt sie die geringsten Verluste an diesem kleiner werdenden Führungsquerschnitt. Die höhere Mode 7 hat an der Übergangsstelle größere Verluste beim Zurückkoppeln in den ursprünglichen, verkleinerten Durchmesser des Kerns 2. Dadurch findet eine Steigerung der Verluste der höheren Mode 7 statt, wodurch eine Modenfilterung entsteht.

Figur 4 zeigt die Auswirkung der erfindungsgemäßen Modenfilterung, hier für ein Ausführungsbeispiel mit Faser-Bragg-Gitter, wie es in Figur 3 illustriert ist. Figur 4 a) gibt dabei das Reflektivitätsspektrum eines Faser-Bragg-Gitters einer 2-modigen Faser 1 wieder, welche keinen Brechzahlmodifikationsbereich 5 aufweist. Dagegen zeigt Figur 4 b) das Reflektivitätsspektrum eines Faser-Bragg-Gitters einer gleichartigen Faser 1 mit Brechzahlmodifikationsbereich 5. Es ist zu erkennen, dass die Mode höherer Ordnung (LP11-Mode) 7 im Falle der Verwendung eines Brechzahlmodifikationsbereiches 5 eine wesentlich geringere Reflektivität aufweist, so dass innerhalb der Faser 1 im Wesentlichen nur noch die Grundmode (LP01-Mode) 8 propagiert.

Gemäß Figur 2 besteht der Brechzahlmodifikationsbereich 5 auch aus zwei separaten Brechzahlmodifikationsbereichen 5, welche zueinander parallel ausgebildet sind und den Kern 2 auf gegenüberliegenden Seiten tangential berühren (Figur 2 a)). Sofern Moden 7, 8 mit verschiedenen Polarisationsrichtungen innerhalb der Faser 1 propagieren, wird dadurch eine Polarisationsfilterung erreicht, dass nur die Moden 7, 8, welche in ihrer Schwingungsebene mit den Brechzahlmodifikationsbereichen in Kontakt treten, den zugehörigen Brechzahlhub wahrnehmen. Insofern lässt sich durch den erfindungsgemäßen Modenfilter ebenso eine Polarisationsfilterung durchführen.

## Patentansprüche

1. Modenfilter zur Reduzierung von Moden höherer Ordnung, mit einer optischen Faser (1), welche einen Kern (2) und einen diesen umgebenden Mantel (3) aufweist, wobei Mantel (3) und Kern (2) voneinander abweichende Brechzahlen haben, wobei die Faser (1) in einem Übergangsbereich (4) von Kern (2) und Mantel (3) mindestens einen lokalen Brechzahlmodifikationsbereich (5) aufweist, welcher im radial äußeren Bereich des Kerns (2) angeordnet ist und sich in den Bereich des Mantels (3) hinein erstreckt,
**dadurch gekennzeichnet, dass** zwei zueinander parallele Brechzahlmodifikationsbereiche (5) so ausgebildet sind, dass sie den Kern (2) auf gegenüberliegenden Seiten tangential berühren.

2. Modenfilter nach Anspruch 1, **dadurch gekennzeichnet, dass** die Länge des Brechzahlmodifikationsbereiches (5) in axialer Richtung der Faser (1) begrenzt ist.

3. Modenfilter nach Anspruch 2, **dadurch gekennzeichnet, dass** die Länge des Brechzahlmodifikationsbereiches (5) der einfachen bis vielfachen Größe des Kerndurchmessers entspricht.

4. Modenfilter nach einem der vorhergehenden Ansprüche, **dadurch gekennzeichnet, dass** der Brechzahlmodifikationsbereich (5) eine Brechzahl größer als die des Mantels (3) aufweist.

5. Modenfilter nach Anspruch 4, **dadurch gekennzeichnet, dass** der Brechzahlmodifikationsbereich (5) eine Brechzahl gleich der des Kerns (2) aufweist.

6. Modenfilter nach einem der vorhergehenden Ansprüche, **dadurch gekennzeichnet, dass** die Faser (1) in axialer Richtung mehrere Brechzahlmodifikationsbereiche (5) aufweist.

7. Modenfilter nach einem der vorhergehenden Ansprüche, **dadurch gekennzeichnet, dass** der Kern (2) zusätzlich ein oder mehrere Faser-Bragg-Gitter aufweist.

8. Modenfilter nach einem der vorhergehenden Ansprüche, **dadurch gekennzeichnet, dass** die Faser (1) eine Large-Mode-Area (LMA) -Faser ist.

9. Faserlaser, insbesondere multi-mode High-Power-Faserlaser, mit einem Modenfilter gemäß einem der Ansprüche 1 bis 8.

## Claims

1. Mode filter for reducing higher-order modes, with an optical fibre (1), which has a core (2) and a cladding (3) surrounding the latter, wherein the cladding (3) and core (2) have refractive indices that differ from one another, wherein the fibre (1) has, in a transition region (4) between core (2) and cladding (3), at least one local refractive index modification region (5) which is arranged in the radially outer region of the core (2) and extends into the region of the cladding (3),
**characterized in that** two refractive index modification regions (5) being in parallel to each other are so configured that they tangentially touch the core (2) on opposite sides.

2. Mode filter according to claim 1, **characterized in that** the length of the refractive index modification region (5) is limited in axial direction of the fibre (1).

3. Mode filter according to claim 2, **characterized in that** the length of the refractive modification region (5) corresponds to the simple up to the multiple magnitude of the core diameter.

4. Mode filter according to any of the preceding claims, **characterized in that** the refractive index modification region (5) has a refractive index which is greater than that of the cladding (3).

5. Mode filter according to claim 4, **characterized in that** the refractive index modification region (5) has a refractive index which is equal to that of the core (2).

6. Mode filter according to any of the preceding claims, **characterized in that** the fibre (1) has several refractive index modification regions (5) in axial direction.

7. Mode filter according to any of the preceding claims, **characterized in that** the core (2) additionally has one or several fibre Bragg gratings.

8. Mode filter according to any of the preceding claims, **characterized in that** the fibre (1) is a large-mode-area (LMA) fibre.

9. Fibre laser, more particularly multi-mode high-power fibre laser, comprising a mode filter according to any of the preceding claims 1 to 8.

## Revendications

1. Filtre de mode pour la réduction de modes d'ordre supérieur, comprenant une fibre optique (1) qui présente un coeur (2) et une gaine (3) enveloppant celui-ci, la gaine (3) et le coeur (2) présentant des indices de réfraction différents l'un de l'autre, la fibre (1) présentant, dans une région de transition (4) du coeur (2) et de la gaine (3), au moins une région de modification d'indice de réfraction locale (5) qui est disposée dans la région radialement extérieure du coeur (2) et qui s'étend vers l'intérieur dans la région de la gaine (3),
**caractérisé en ce que**
deux régions de modification d'indice de réfraction (5) parallèles l'une à l'autre sont réalisées de telle sorte qu'elles viennent en contact avec le coeur (2) tangentiellement sur des côtés opposés.

2. Filtre de mode selon la revendication 1, **caractérisé en ce que** la longueur de la région de modification d'indice de réfraction (5) dans la direction axiale de la fibre (1) est limitée.

3. Filtre de mode selon la revendication 2, **caractérisé en ce que** la longueur de la région de modification d'indice de réfraction (5) correspond à la grandeur ou à un multiple de la grandeur du diamètre du noyau.

4. Filtre de mode selon l'une quelconque des revendications précédentes, **caractérisé en ce que** la région de modification d'indice de réfraction (5) présente un indice de réfraction supérieur à celui de la gaine (3).

5. Filtre de mode selon la revendication 4, **caractérisé en ce que** la région de modification d'indice de réfraction (5) présente un indice de réfraction égal à celui du noyau (2).

6. Filtre de mode selon l'une quelconque des revendications précédentes, **caractérisé en ce que** la fibre (1) présente dans la direction axiale plusieurs régions de modification d'indice de réfraction (5).

7. Filtre de mode selon l'une quelconque des revendications précédentes, **caractérisé en ce que** le noyau (2) présente en outre un ou plusieurs réseaux de Bragg pour fibres.

8. Filtre de mode selon l'une quelconque des revendications précédentes, **caractérisé en ce que** la fibre (1) est une fibre Large Mode Area (LMA).

9. Laser à fibre optique, en particulier laser à fibre optique de grande puissance multimode, comprenant un filtre de mode selon l'une quelconque des revendications 1 à 8.
